# EUROPÄISCHE PATENTSCHRIFT

(11) **EP 4 355 642 B1**
(45) Veröffentlichungstag und Bekanntmachung des Hinweises auf die Patenterteilung: **04.03.2026**
(21) Anmeldenummer: 23733955.1
(22) Anmeldetag: 20.06.2023
(51) Int. Cl.: B62K 21/26

(54) **FAHRRADGRIFF-SCHELLE**
BICYCLE HANDLE CLAMP
COLLIER DE SERRAGE POUR POIGNÉE DE BICYCLETTE

(30) Priorität: 20.06.2022 DE 202022103427 U
(43) Veröffentlichungstag der Anmeldung: 24.04.2024
(73) Patentinhaber: Ergon International GmbH, 56070 Koblenz (DE)
(72) Erfinder: KRAUSE, Andreas, 56068 Koblenz (DE)
(74) Vertreter: dompatent
(86) Internationale Anmeldenummer: PCT/EP2023/066601
(87) Internationale Veröffentlichungsnummer: WO 2023/247515

(56) Entgegenhaltungen:
- EP-A1- 2 881 314
- CN-Y- 2 741 857
- DE-U1- 202013 101 848
- JP-A- H09 123 974
- TW-U- M 621 940
- US-A1- 2020 156 729

## Beschreibung

Die Erfindung betrifft eine Fahrradgriff-Schelle sowie einen Fahrradgriff mit einer Fahrradgriff-Schelle.

Zur Befestigung von Fahrradgriffen an einem Fahrradlenker ist es bekannt, diese mit Hilfe einer Fahrradgriff-Schelle zu befestigen. Hierzu weisen die entsprechenden Fahrradgriffe üblicherweise eine innenliegende Hülse auf, deren Hülsendurchmesser geringfügig größer ist als der Außendurchmesser des Lenkers ist. Auf der Hülse ist ein die Hülse umgebendes Griffelement, aus üblicherweise weicherem Kunststoffmaterial angeordnet. Das Griffelement umgibt die Innenhülse des Fahrradgriffs in Umfangsrichtung. Lediglich ein seitlicher Bereich der Hülse, der auf der Innenseite und/oder der Außenseite vorgesehen sein kann, ist nicht von einem Griffelement umgeben. In diesem Bereich kann die Hülse mit Hilfe einer Fahrradgriff-Schelle klemmend am Lenker befestigt werden. Gegebenenfalls weist die Innenhülse in diesem Klemmbereich einen Klemmschlitz auf, oder weist einen weicheren Bereich auf, sodass durch die Fahrradgriff-Schelle ein Verringern des Innendurchmessers der Innenhülse zum klemmenden Fixieren auf dem Lenker möglich ist.

Die Fahrradgriff-Schelle ist hierbei als geschlitzte Schelle ausgebildet und weist zwei Ansätze oder Verdickungen auf. In diesem Bereich ist eine Schraube als Klemmeinrichtung vorgesehen. Hierzu sind die Fahrradgriff-Schellen beispielsweise aus Metall ausgebildet, sodass in einem der beiden Ansätze bzw. einer der beiden Verdickungen ein Gewinde vorgesehen werden kann. In dem anderen Ansatz bzw. an der anderen Verdickung ist eine Durchgangsöffnung angeordnet, durch die als Klemmelement eine Schraube eingeführt wird. Durch Eindrehen der Schraube in das Gewinde erfolgt ein Verringern des Innendurchmessers der Innenhülse und somit ein klemmendes Fixieren der Hülse des Fahrradgriffs auf dem Fahrradlenker. Um eine ausreichende Klemmkraft erzeugen zu können, werden als Klemmeinrichtung üblicherweise Schrauben vorgesehen, die in Gewinde eingreifen. Insofern ist es üblich, dass bekannte Fahrradgriff-Schellen aus Metall hergestellt sind.

Eine Fahrradgriff-Schelle mit den Merkmalen des Oberbegriffs des Anspruchs 1 ist aus EP 2 881 314 A1 bekannt.

Aufgabe der Erfindung ist es, eine Fahrradgriff-Schelle zu schaffen, die bei Erzielung einer zuverlässigen Klemmkraft kostengünstig herstellbar ist.

Die Lösung der Aufgabe erfolgt erfindungsgemäß durch eine Fahrradgriff-Schelle mit den Merkmalen des Anspruchs 1.

Die Fahrradgriff-Schelle dient zum Fixieren eines Fahrradgriffs an einem Lenker. Die erfindungsgemäße Fahrradgriff-Schelle weist ein Ringsegment auf, d.h. ein nicht vollständig geschlossenes ringförmiges Segment, das sich üblicherweise um mehr als 250°, insbesondere um mehr als 300° des Umfangs des Fahrradgriffs bzw. einer Innenhülse des Fahrradgriffs erstreckt. Das Ringsegmentelement liegt in montiertem Zustand insbesondere in einem Klemmbereich eines eine Innenhülse aufweisenden Fahrradgriffs an. Mit dem Ringsegmentelement sind zwei Ansätze verbunden. Diese dienen zur Aufnahme einer Klemmeinrichtung. Zwischen diesen beiden Ansätzen ist ein Schlitz ausgebildet. Die Breite des Schlitzes kann durch die Klemmeinrichtung zum Fixieren des Fahrradgriffs auf dem Fahrradlenker verringert werden.

Die Klemmeinrichtung weist ein Klemmelement sowie ein Haltelement auf. Zum klemmenden Fixieren wirkt das Klemmelement mit dem Halteelement derart zusammen, dass die Breite des Schlitzes zwischen den beiden Ansätzen verringert wird. Das Halteelement ist von einem der Ansätze umgeben bzw. zumindest im Wesentlichen innerhalb eines der beiden Ansätze angeordnet. Erfindungsgemäß ist das Halteelement an einer Außenseite des Ansatzes von diesem umgeben. Durch ein derartig integriertes Halteelement ist es möglich, eine kostengünstige Fahrradgriff-Schelle herzustellen. Insbesondere ist es möglich, das Halteelement aus einem anderen Material herzustellen. Besonders bevorzugt ist somit, dass die Fahrradgriff-Schelle aus zwei Komponenten hergestellt ist, wobei das Klemmelement selbst, bei dem es sich insbesondere um eine Schraube handelt, als weiteres gesondertes Element vorgesehen ist.

Besonders bevorzugt ist es, das Halteelement aus Metall herzustellen, das zumindest teilweise, insbesondere vollständig von einem der Ansätze umgeben ist, wobei es hierbei besonders bevorzugt ist, dass der Ansatz aus einem Kunststoffmaterial hergestellt ist. Insbesondere ist es möglich das Halteelement von einem aus Kunststoff hergestellten Ansatz durch Umspritzen in dem Ansatz anzuordnen und hierin zu fixieren.

Vorzugsweise ist das Halteelement derart in dem Ansatz angeordnet, dass es nicht nur in Umfangsrichtung des Halteelement von dem Ansatz umgeben ist, sondern auch die Außenseite des Halteelements von diesem umgeben ist. Bevorzugt ist es insofern insbesondere, dass das Halteelement bei montierter Fahrradgriff-Schelle nicht sichtbar ist, sondern an allen Außenseiten umgeben bzw. verschlossen ist. Erfindingsgemäß ist das Halteelement ausschließlich an einer Seite zugänglich, nämlich an der Innenseite, die in Richtung des zwischen den beiden Ansätzen vorgesehenen Schlitzes weist. Über die Innenseite wird das Klemmelement, insbesondere die Schraube in das Halteelement eingeführt, insbesondere eingeschraubt.

Erfindungsgemäß handelt es sich bei dem Haltelement um eine Gewindehülse. Diese kann in weiter bevorzugter Ausführungsform an einer Innenseite, d.h. an der Seite, die in einem Abstand zum Schlitz angeordnet ist, verschlossen sein. Die Hülse ist somit nur an einer Seite, nämlich an derjenigen Richtung des Schlitzes weisenden Seite offen und ansonsten trog- oder kappenförmig ausgebildet.

Ferner ist es bevorzugt, dass das Halteelement zumindest einen radialen Ansatz zur axialen Fixierung innerhalb des Ansatzes, in dem das Halteelement angeordnet ist, aufweist. Bei dem radialen Ansatz kann es sich um Stege, einen tellerförmigen Ansatz, eine Scheibe oder dergleichen handeln. Ferner ist es bevorzugt, dass an einer Außenseite des Halteelements Ansätze, Rillen oder dergleichen vorgesehen sind, um eine rotatorische Fixierung zu ermöglichen. Insbesondere bei einer von Kunststoffmaterial umgebenen in dieses eingespritzte Halteelement ist durch das Vorsehen von radialen und/oder seitlichen Ansätzen ein sicheres Halten des Halteansatzes in dem Kunststoffansatz realisiert, so dass dieser aus dem Kunststoffansatz weder axial herausgezogen noch verdreht werden kann. Besonders bevorzugt ist es insofern, dass das Halteelement als Blindnietmutter mit zumindest teilweise gerändelter Außenseite ausgebildet ist. Das Klemmelement weist in bevorzugter Ausführungsform einen Schaft auf, der mit dem Halteelement zusammenwirkt. Hierbei kann ein Zusammenwirken durch Einrasten oder dergleichen erfolgen. Bevorzugt ist es, dass der Schaft ein Gewinde aufweist, das in ein Gewinde des Halteelements eingreift. Ferner ist es bevorzugt, dass das Klemmelement einen Kopfteil ähnlich einer Schraube aufweist, sodass auf einfache Weise ein Verringern der Schlitzbreite zum klemmenden Fixieren des Fahrradgriffs auf den Lenker realisiert ist. Besonders bevorzugt ist es, dass das Klemmelement als Schraube ausgebildet ist.

Vorzugsweise ist der Ansatz, mit dem das Kopfteil des Klemmelements zusammenwirkt derart ausgebildet, das dieses eine Ausnehmung aufweist, in der das Kopfteil in montiertem Zustand insbesondere vollständig angeordnet ist. Das Kopfteil des Klemmelements steht somit in bevorzugter Ausführungsform nicht über eine Außenseite des Ansatzes vor.

Besonders bevorzugt ist es, dass das Ringsegmentelement und insbesondere beide Ansätze einstückig ausgebildet sind. Besonders bevorzugt handelt es sich bei dem verwendeten Material um Kunststoffmaterial. Des Weiteren ist es bevorzugt, dass das Ringsegmentelement sowie insbesondere die beiden mit diesem verbundenen, insbesondere einstückig ausgebildeten Ansätze, durch Spritzgießen hergestellt werden. Beim Spritzgussverfahren kann sodann das Halteelement innerhalb des Ansatzes angeordnet und unmittelbar mit umspritzt und somit in dem entsprechenden Ansatz fixiert werden.

Ferner ist es möglich, dass an einer Innenseite des Ringsegmentelements und insbesondere an einer Innenseite eines der Ansätze, d.h. an einer Seite der Ansätze des in Richtung des Inneren des Ringsegmentelements weist, ein Justageansatz vorgesehen ist. Hierbei kann es sich um einen Bereich mit geringerem Durchmesser handeln. Dies dient dazu, dass die Fahrradgriff-Schelle relativ zu der Innenhülse des Fahrradgriffs in definierter Lage angeordnet ist. Insbesondere kann der Justageansatz an seiner in montiertem Zustand in Richtung des Fahrradlenkers weisenden Innenseite einen Radius aufweisen, der der Außenseite des Lenkers entspricht. Der übrige Bereich des Ringsegmentelements weist einen Innendurchmesser auf, der im Wesentlichen dem Außendurchmesser der Hülse entspricht.

Ferner betrifft die Erfindung einen Fahrradgriff mit einer, insbesondere aus härterem Material hergestellten Innenhülse, die von einem aus insbesondere weicherem Material hergestellten Griffelement in Umfangsrichtung umgeben ist. Das Griffelement umgibt die Innenhülse vorzugsweise nicht vollständig, sodass ein freibleibender Klemmbereich ausgebildet ist. Vorzugsweise ist in diesem Klemmbereich eine Fahrradgriff-Schelle, wie vorstehend beschrieben, zur Fixierung des Fahrradgriffs an einem Fahrradlenker angeordnet. Der Klemmbereich kann einen Schlitz aufweisen, sodass auf einfache Weise ein klemmendes Fixieren der Innenhülse am Fahrradlenker mit Hilfe der erfindungsgemäßen Fahrradgriff-Schelle möglich ist.

Nachfolgend wird die Erfindung anhand einer bevorzugten Ausführungsform unter Bezugnahme auf die anliegenden Zeichnungen näher erläutert.

Es zeigen:
- Figur 1: eine schematische Draufsicht der Fahrradgriff-Schelle,
- Figur 2: eine schematische Seitenansicht in Richtung des Pfeils II in Figur 1, und
- Figur 3: eine schematische Längs-Schnittansicht entlang der Linie III-III in Figur 2.

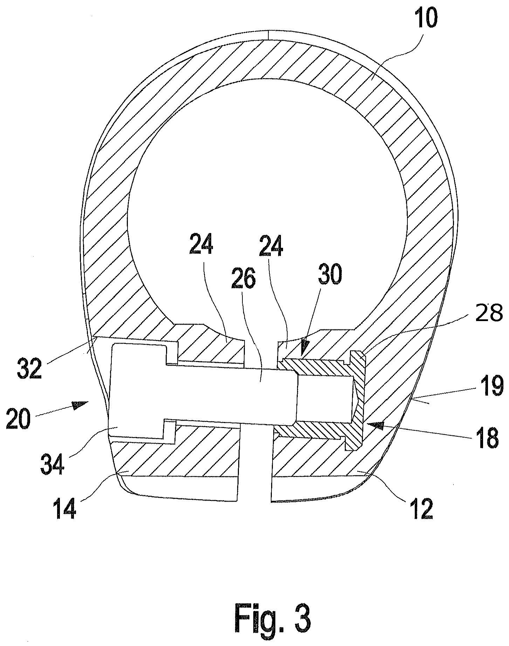

Die Fahrradgriff-Schelle weist im dargestellten Ausführungsbeispiel ein Ringsegmentelement 10 auf. Dieses geht in zwei Ansätze 12, 14 über und ist einstückig mit diesen ausgebildet. Zwischen den beiden Ansätzen 12, 14 ist ein Schlitz 16 ausgebildet. Mit Hilfe einer Klemmeinrichtung 18, 20 (Figur 3) kann der Schlitz in seiner Breite verringert werden. Das Ringsegmentelement 10 weist eine Innenseite 22 auf, die mit Ausnahme von zwei Justageansätzen 24 einen Innendurchmesser aufweist, der dem Außendurchmesser einer Innenhülse eines Fahrradgriffs entspricht. Im Bereich der Justageansätze ist der Innendurchmesser geringer und entspricht dem Außendurchmesser des Fahrradgriffs. Die Justageansätze 22 dienen zur Justage der Fahrradgriff-Schelle auf der Hülse, sodass eine Justage in Umfangsrichtung gewährleistet ist.

Innerhalb des Ansatzes 12 (Figur 3) ist ein als geschlossene Hülse ausgebildetes Halteelement 18 angeordnet. Das Halteelement 18 weist ein Innengewinde auf, in das ein mit einem Außengewinde versehener Schaft 26 eines als Schraube ausgebildeten Klemmelements 20 eingeschraubt werden kann. Die Hülse 18 ist auf ihrer Innenseite verschlossen und weist an der Innenseite zusätzlich einen radialen, insbesondere tellerförmigen Ansatz 28 auf, durch den ein sicheres Halten in axialer Richtung innerhalb des Ansatzes 12 gewährleistet ist. An einer Außenseite 30, des als Hülse ausgebildeten Halteelements 18 sind ähnlich einer Verzahnung Ansätze und Vertiefungen ausgebildet, um ein Verdrehen des Halteelements 18 innerhalb des Ansatzes 12 zu vermeiden.

Zur Herstellung kann das gesamte Ringsegmentelement 10 zusammen mit den beiden Ansätzen 12, 14 durch Spritzgießen hergestellt werden. Hierbei wird das Halteelement 18 innerhalb der Spritzgussform angeordnet und durch das Umspritzen in dem Ansatz 12 auf einfache Weise fixiert. Es ist somit auf einfache Weise möglich, eine aus Kunststoff hergestellte und somit günstige Fahrradgriff-Schelle herzustellen, die aufgrund des integrierten, insbesondere aus Metall bestehenden Halteelements eine zuverlässige Klemmung ermöglicht.

In dem dem Ansatz 12 gegenüberliegenden Ansatz 14 ist eine Durchgangsöffnung zur Anordnung des als Schraube ausgebildeten Klemmelements 20 vorgesehen. Diese weist neben einer Durchgangsbohrung eine im Durchmesser größere Ausnehmung 32 auf, in der ein Kopfteil 34 der Schraube angeordnet ist.

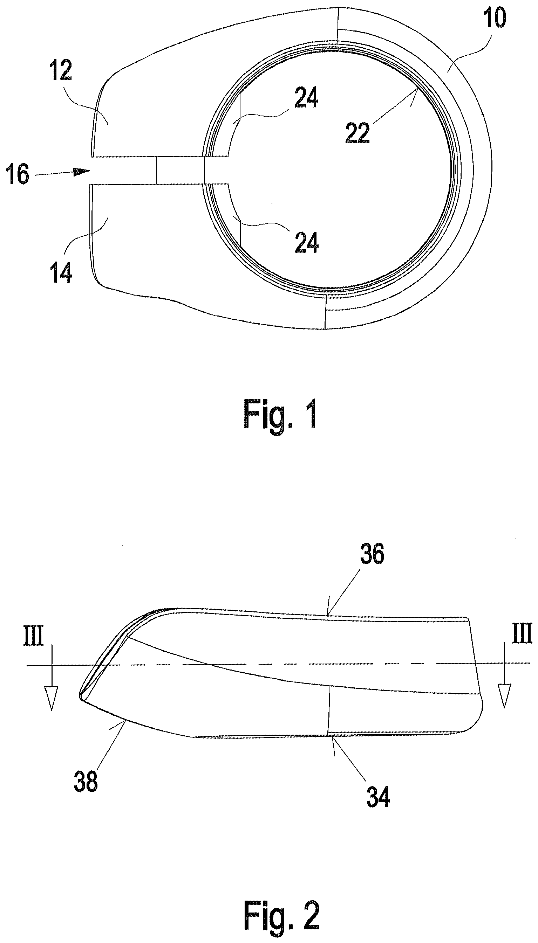

Aufgrund der Anordnung des Halteelements 18 vollständig innerhalb des Ansatzes 12 ist in Seitenansicht (Figur 2) keine Öffnung sichtbar. Eine Innenseite 34 der Fahrradgriff-Schelle liegt an einem eine Innenhülse des Fahrradgriffs umgebenden Griffelement an. Die gegenüberliegende Außenseite 36 ist beispielsweise auf der Außenseite des Fahrradlenkers oder innen angeordnet. Wenn die Seite 36 auf der Außenseite des Lenkers angeordnet ist, kann in dieser ferner ein Verschlussstopfen angeordnet werden. Die Innenseite 34 ist in einem Bereich außerhalb der Innenhülse des Fahrradelements gekrümmt. Dieser gekrümmte Bereich 38 ist in Richtung der äußeren Seite 36 gekrümmt und ermöglicht somit einen fließenden Übergang, beispielsweise zu einem als Handballenabstützelement dienenden Bereich eines Fahrradgriffelements, das sich an die Außenfläche 38 anschließt. Sämtliche Übergänge sind vorzugsweise stufenfrei ausgebildet.

## Patentansprüche

1. Fahrradgriff-Schelle zum Fixieren eines Fahrradgriffs an einem Lenker, mit
einem Ringsegmentelement (10), das in montiertem Zustand einen zu klemmenden Teil eines Fahrradgriffs, insbesondere an eine Innenhülse eines Fahrradgriffs in Umfangsrichtung teilweise umgibt,
zwei mit dem Ringsegmentelement verbundene Ansätze (12, 14) zur Aufnahme einer Klemmeinrichtung (18, 20) und
einem zwischen den beiden Ansätzen (12, 14) ausgebildeten Schlitze (16), dessen Breite durch die Klemmeinrichtung (18, 20) zum Fixieren des Fahrradgriffs auf dem Lenker verringerbar ist,
wobei die Klemmeinrichtung (18, 20) ein Klemmelement (20) aufweist, das zum klemmenden Fixieren mit einem Halteelement (18) zusammenwirkt und
wobei das Halteelement (18) von einem der Ansätze (12) zumindest teilweise umgeben ist,
wobei das Halteelement (18) ausschließlich von einer in Richtung des anderen Ansatzes (14) weisenden Innenseite des Ansatzes zugänglich ist,
**dadurch gekennzeichnet, dass**
das Halteelement (18) als Gewindehülse ausgebildet ist.

2. Fahrradgriff-Schelle nach Anspruch 1, **dadurch gekennzeichnet, dass** das Halteelement (18) an seiner Innenseite verschlossen ist und/oder zumindest einen radialen Ansatz (28) zur axialen Fixierung im Ansatz (12) aufweist.

3. Fahrradgriff-Schelle nach Anspruch 1 oder 2, **dadurch gekennzeichnet, dass** das Halteelement (18) an seiner Außenseite (30) Ansätze zur rotatorischen Fixierung aufweist.

4. Fahrradgriff-Schelle nach einem der Ansprüche 1 bis 3, **dadurch gekennzeichnet, dass** das Klemmelement einen Schaft (26) aufweist, der mit dem Halteelement (18) zusammenwirkt, wobei der Schaft (26) vorzugsweise ein Gewinde aufweist, das in das Gewinde des Halteelements (18) zur Fixierung einschraubbar ist.

5. Fahrradgriff-Schelle nach Anspruch 4, **dadurch gekennzeichnet, dass** das Klemmelement (20) einen Kopfteil (34) aufweist, das mit dem Schaft (26) verbunden ist, wobei das Klemmelement (20) vorzugsweise als Schraube ausgebildet ist.

6. Fahrradgriff-Schelle nach Anspruch 5, **dadurch gekennzeichnet, dass** das Kopfteil (34) in montiertem Zustand insbesondere vollständig in einer Ausnehmung (32) des Ansatzes (14) angeordnet ist.

7. Fahrradgriff-Schelle nach einem der Ansprüche 1 bis 6, **dadurch gekennzeichnet, dass** das Ringsegmentelement (10) und insbesondere beide Ansätze (10, 12) einstückig, insbesondere aus einem Kunststoffspritzguss hergestellt sind.

8. Fahrradgriff-Schelle nach einem der Ansprüche 1 bis 7, **dadurch gekennzeichnet, dass** zumindest einer der Ansätze (10, 12) an einer in Richtung der Innenseite des Ringsegmentelements (10) weisenden Seite einen Justageansatz (24) aufweist.

9. Fahrradgriff, mit einer Innenhülse, einem die Innenhülse umgebenden Griffelement, einem von der Innenhülse ausgebildeten Klemmbereich und einer im Klemmbereich angeordneten Fahrradgriff-Schelle nach einem der Ansprüche 1 bis 8.

## Claims

1. A bicycle handle clamp for attaching a bicycle handle to a handlebar, comprising
a ring segment element (10) which, in the assembled state, partially surrounds a part of a bicycle handle to be clamped, in particular on an inner sleeve of a bicycle handle in the circumferential direction,
two protrusions (12, 14) connected to the ring segment element for receiving a clamping device (18, 20), and
a slot (16) formed between the two protrusions (12, 14), the width of which can be reduced by the clamping device (18, 20) for fixing the bicycle handle to the handlebar,
wherein the clamping device (18, 20) has a clamping element (20) which interacts with a holding element (18) for clamping fixation, and
wherein the holding element (18) is at least partially surrounded by one of the protrusions (12),
wherein the holding element (18) is accessible exclusively from an inner side of the protrusion facing in the direction of the other protrusion (14),
**characterized in that**
the holding element (18) is designed as a threaded sleeve.

2. The bicycle handle clamp according to claim 1, **characterized in that** the holding element (18) is closed on its inner side and/or has at least one radial protrusion (28) for axial fixing in the protrusion (12).

3. The bicycle handle clamp according to claim 1 or 2, **characterized in that** the holding element (18) has protrusions on its outer side (30) for rotational fixing.

4. The bicycle handle clamp according to any one of claims 1 to 3, **characterized in that** the clamping element has a shaft (26) which cooperates with the holding element (18), the shaft (26) preferably having a thread which can be screwed into the thread of the holding element (18) for fixing.

5. The bicycle handle clamp according to claim 4, **characterized in that** the clamping element (20) has a head part (34) which is connected to the shaft (26), the clamping element (20) preferably being designed as a screw.

6. The bicycle handle clamp according to claim 5, **characterized in that** the head part (34) is arranged, in the mounted state, in particular completely in a recess (32) of the protrusion (14).

7. The bicycle handle clamp according to any one of claims 1 to 6, **characterized in that** the ring segment element (10) and in particular both protrusions (10, 12) are manufactured in one piece, in particular from a plastic injection molding.

8. The bicycle handle clamp according to any one of claims 1 to 7, **characterized in that** at least one of the protrusions (10, 12) has an adjustment protrusion (24) on a side facing towards the inner side of the ring segment element (10).

9. The bicycle handle, having an inner sleeve, a grip element surrounding the inner sleeve, a clamping region formed by the inner sleeve and a bicycle handle clamp arranged in the clamping region according to any one of claims 1 to 8.

## Revendications

1. Collier de serrage pour poignée de bicyclette pour la fixation d'une poignée de bicyclette sur un guidon, comportant
un élément formant segment annulaire (10) qui, à l'état monté, entoure partiellement dans la direction circonférentielle une partie à serrer d'une poignée de bicyclette, en particulier sur une douille intérieure d'une poignée de bicyclette, deux embouts (12, 14) reliés à l'élément formant segment annulaire et permettant de recevoir un dispositif de serrage (18, 20) et
une fente (16) réalisée entre les deux embouts (12, 14), dont la largeur peut être réduite par le dispositif de serrage (18, 20) pour la fixation de la poignée de bicyclette sur le guidon,
dans lequel le dispositif de serrage (18, 20) présente un élément de serrage (20) qui coopère avec un élément de maintien (18) pour la fixation par serrage et
dans lequel l'élément de maintien (18) est au moins partiellement entouré par l'un des embouts (12),
dans lequel l'élément de maintien (18) est accessible exclusivement depuis une face intérieure de l'embout orientée en direction de l'autre embout (14), **caractérisé en ce que**
l'élément de maintien (18) est réalisé comme une douille filetée.

2. Collier de serrage pour poignée de bicyclette selon la revendication 1, **caractérisé en ce que** l'élément de maintien (18) est fermé sur son côté intérieur et/ou présente au moins un embout radial (28) pour la fixation axiale dans l'embout (12).

3. Collier de serrage pour poignée de bicyclette selon la revendication 1 ou 2, **caractérisé en ce que** l'élément de maintien (18) présente sur son côté extérieur (30) des embouts pour la fixation en rotation.

4. Collier de serrage pour poignée de bicyclette selon l'une des revendications 1 à 3, **caractérisé en ce que** l'élément de serrage présente une tige (26) qui coopère avec l'élément de maintien (18), dans lequel la tige (26) présente de préférence un filetage qui peut être vissé dans le filetage de l'élément de maintien (18) pour la fixation.

5. Collier de serrage pour poignée de bicyclette selon la revendication 4, **caractérisé en ce que** l'élément de serrage (20) présente une partie de tête (34) qui est reliée à la tige (26), dans lequel l'élément de serrage (20) est de préférence réalisé comme une vis.

6. Collier de serrage pour poignée de bicyclette selon la revendication 5, **caractérisé en ce que** la partie de tête (34) est disposée, à l'état monté, dans un évidement (32) de l'embout (14) en particulier entièrement.

7. Collier de serrage pour poignée de bicyclette selon l'une des revendications 1 à 6, **caractérisé en ce que** l'élément formant segment annulaire (10) et en particulier les deux embouts (10, 12) sont fabriqués d'une seule pièce, en particulier à partir d'un moulage par injection de matière plastique.

8. Collier de serrage pour poignée de bicyclette selon l'une des revendications 1 à 7, **caractérisé en ce qu'**au moins l'un des embouts (10, 12) présente un embout d'ajustement (24) sur une face orientée en direction de la face intérieure de l'élément formant segment annulaire (10).

9. Poignée de bicyclette, comportant une douille intérieure, un élément de poignée entourant la douille intérieure, une zone de serrage réalisée par la douille intérieure et un collier de serrage pour poignée de bicyclette selon l'une des revendications 1 à 8 disposé dans la zone de serrage.
